# EUROPEAN PATENT APPLICATION

(11) **EP 3 160 082 A1**
(43) Date of publication of application: **26.04.2017**
(21) Application number: 14895591.7
(22) Date of filing: 11.11.2014
(51) Int. Cl.: H04L 12/24

(54) **MULTIMODE NETWORK MANAGEMENT CONFIGURATION MODEL UPGRADE METHOD AND DEVICE**

(30) Priority: 23.06.2014 CN 201410284241
(71) Applicant: ZTE Corporation, Shenzhen, Guangdong 518057 (CN)
(72) Inventor: FENG, Jiaojiao, Shenzhen Guangdong 518057 (CN)
(74) Representative: Awapatent AB
(86) International application number: PCT/CN2014/090768
(87) International publication number: WO 2015/196699

(57) **Abstract**

A multimode network management configuration model upgrade method and apparatus are disclosed. The method includes: expanding a configuration directory of all systems supported by a serving end and a client; conducting secondary development and deployment of a configuration model in the configuration directory; and issuing a configuration to a base station side. By expanding the configuration directory of all systems supported by the serving end and the client, unified management of all systems supported by the serving end and the client is completed, so that the secondary development and deployment of the configuration model conducted in the configuration directory is more convenient and effective. By means of the above method, each product developer can complete automatic upgrading of a multimode configuration model with respect to service constraints of his/her products, thereby reducing the communication cost, and increasing the research and development quality, so that repeated development caused by the same platform service can be avoided.

## Description

### Technical Field

The present invention relates to the field of the wireless communication network management, and in particular to a multimode network management configuration model upgrading method and apparatus.

### Background of the Related Art

Currently, in the field of the mobile communication network management, from 2G, 3G to 4G, the wireless technology becomes more and more abundant, and the pace of technology development forces the trend of network convergence. Based on the situation, an Operation and Maintenance Center (OMC) large-scale network management system has the need to achieve the supporting of various standards and multiple systems through software configuration, to achieve flexible managements, including management and configuration on network elements of various single-mode systems such as GSM, UMTS, CDMA, LTE FDD, LTE TDD, etc. and combination of any systems.

The unified Operation & Maintains Module NodeB (OMMB) network management of the Software Defined Radio (SDR, i.e., a soft base station) is an operation and maintenance support management system of the SDR multimode soft base station products, which supports the flexible networking and flexible deployment of the multimode soft base station and is a component facing the operation and maintenance management of the base station. In the related art, the multimode base station is directly managed, which is composed of functions such as configuration management, alarm management, diagnostic management, performance management, and version management, etc. Herein, the configuration management provides the main function of modifying the base station configurations, and needs to adjust parameters and debug services in real time according to the practical operation situation of the network elements during the maintenance process of the network management system, thus it is a very important part in the OMC management.

The management scope of the unified OMMB network management of the soft base station covers SDR soft base station devices of various wireless systems of CDMA/GSM/UMTS/TDSCDMA/FDD LTE/TDD LTE, including a Building Base band Unit (BBU), a Radio Remote Unit (RRU), and peripheral auxiliary devices (such as an electrically adjustable antenna, a tower mounted amplifier, and a wave trap, etc.). The managed station type specifications include indoor type and outdoor type macro stations, distributed BBU+RRU, and a Pico station, etc. The current configuration management mode of the multimode OMMB should not only support the single-mode configuration model but also support the multimode configuration model of any combination required by the operators and the products, that is, a set of multimode network management manages the network elements of all products, and various products are uniformly managed by one multimode network management system, to ensure flexibly supporting the effective operation and maintenance management to the network devices by the user.

The device network management system in the industry is generally achieved by using the traditional client/serving end (C/S) architecture, the client can be a graphical GUI interface (a fat client) or a simple command window (a thin client) used for interacting with the user, and it sends an operation request of the user to the serving end, the serving end is really responsible for processing and recording the user request to the database and returning a request result to the corresponding client, and then the request result is presented to the user by the client. A plurality of clients can simultaneously access one serving end.

Currently, the multimode network management deployment way includes the CDMA network management OMMB co-managing a CDMA and LTE mixed-mode base station, and the LTE network management OMMB co-managing an LTE FDD single-mode base station, an LTE TDD single-mode base station, and a common-mode base station of two systems LTE FEE and LTE TDD; the GU network management OMMB supports the co-management of single modes GSM and UMTS and a combined model of all common mode systems related to the GSM, the UMTS, the LTEFDD and the LTETDD. It will certainly cause serious repeated development between different models and consumption of the development human power; the amount of the maintenance documents of the configuration model in the secondary development is huge, and the service logic is more complex, which is not easy to maintain only depending on human guaranteeing and is easy to make a mistake; the changing of one configuration parameter will involve a plurality of configuration directories, and the modification to one service requirement proposed by the operator also affects a big area, and the maintenance is very poor, which results in too much defect leakage as well. In addition, because the developments of the multimode network management products are often performed by cross-regional development teams, service logics in various systems are very different, and the human communication costs are too much, thus the development efficiency is difficult to be guaranteed. Visibly, the existing network management multimode configuration model upgrading brings many problems to the upgrading due to the disunity. Therefore, a high efficient development and deployment mechanism is urgently needed for the multimode co-management, so that it is required to urgently find a cross multimode network management system which is compatible with a configuration model upgrade method for the multimode combined model management.

### Content of the Invention

The embodiments of the present invention provide a multimode network management configuration model upgrade method and apparatus, to solve the problem that the multimode network management configuration model is not uniformly upgraded in the related art.

In order to solve the above technical problem, an embodiment of the present invention provides a multimode network management configuration model upgrade method, including: expanding a configuration directory of all systems supported by a serving end and a client; conducting secondary development and deployment of a configuration model in the configuration directory; and issuing a configuration to a base station side.

In one embodiment of the present invention, conducting secondary development and deployment of a configuration model in the configuration directory includes: generating a description configuration file of a managed object model; generating a product scene customization model; generating a single board constraint package and a path storage file of single board configurations; and generating a table structure and an upgrade script of configuration data.

In one embodiment of the present invention, generating a single board constraint package and a path storage file of single system configurations includes:
setting the path storage file corresponding to a single board configuration function; herein, the path storage file is used for storing a storage path of a configuration file corresponding to the single board configuration function of each system; and
according to a single board configuration function selected by a user and single board system information, searching for a storage path corresponding to the single board system information from a path storage file corresponding to the single board configuration function, and updating a configuration file in the storage path according to the single board configuration function selected by the user.

In one embodiment of the present invention, the storage path is stored in the path storage file in group according to the client and the serving end, and a sort order of storage paths corresponding to each system in the client and the serving end is fixed.

In one embodiment of the present invention, the method further includes: recording both an intermediate process and a final result of multimode network management configuration model upgrading in a file.

In one embodiment of the present invention, after conducting secondary development and deployment of a configuration model in the configuration directory, the method further includes: creating an automatic single board traversal script, and testing single boards one by one.

Another embodiment of the present invention provides a multimode network management configuration model upgrade apparatus, including an expansion module, a deployment module and an issuing module; herein,
the expansion module is arranged to expand a configuration directory of all systems supported by a serving end and a client;
the deployment module is arranged to conduct secondary development and deployment of a configuration model in the configuration directory; and
the issuing module is arranged to issue a configuration to a base station side.

In one embodiment of the present invention, the deployment module further includes a managed object model configuration file generation module, arranged to generate a description configuration file of a managed object model; a scene customization model generation module, arranged to generate a product scene customization model; a single board constraint package generation module, arranged to generate a single board constraint package and a path storage file of single board configurations; and a script generation module, arranged to generate a table structure and an upgrade script of configuration data.

In one embodiment of the present invention, the single board constraint package generation module further includes a path storage file setting submodule, a searching submodule and an update submodule;
the path storage file setting submodule is arranged to set a path storage file corresponding to a single board configuration function; the path storage file is used for storing a storage path of a configuration file corresponding to the single board configuration function of each system;
the searching submodule is arranged to: according to a single board configuration function selected by a user and single board system information, search for a storage path corresponding to the single board system information from a path storage file corresponding to the single board configuration function; and
the update submodule is arranged to update a configuration file in the storage path according to the single board configuration function selected by the user.

In one embodiment of the present invention, the apparatus further includes a recording module, arranged to record both an intermediate process and a final result of multimode network management configuration model upgrading in a file.

In one embodiment of the present invention, the apparatus further includes a traversal script creation module, arranged to create an automatic single board traversal script, and test single boards one by one.

A still another embodiment of the present invention provides a computer program and a carrier thereof, herein, the computer program includes a program instruction, when the program instruction is executed by a multimode network management configuration model upgrade device, the device is enabled to execute the above multimode network management configuration model upgrade method.

The beneficial effect of the embodiments of the present invention includes that: a multimode network management configuration model upgrade method and apparatus are provided; the method includes: expanding a configuration directory of all systems supported by a serving end and a client; conducting secondary development and deployment of a configuration model in the configuration directory; and issuing a configuration to a base station side. By expanding the configuration directory of all systems supported by the serving end and the client, unified management of all systems supported by the serving end and the client is completed, so that the secondary development and deployment of the configuration model conducted in the configuration directory is more convenient and effective. By means of the method provided by the embodiment of the present invention, each product developer can complete automatic upgrading of a multimode configuration model with respect to service constraints of his/her products, thereby reducing the communication cost, and increasing the research and development quality, so that repeated development caused by the same platform service can be avoided.

### Brief Description of Drawings

FIG. 1 is a flow chart of a multimode network management configuration model upgrade method provided by the embodiment 1 of the present invention;
FIG. 2 is a flow chart of performing secondary development and deployment of a configuration model in a configuration directory provided by the embodiment 1 of the present invention;
FIG. 3 is a flow chart of testing a script provided by the embodiment 1 of the present invention;
FIG. 4 is a structure diagram of a multimode network management configuration model upgrade apparatus provided by the embodiment 2 of the present invention;
FIG. 5 is a structure diagram of a deployment module provided by the embodiment 2 of the present invention;
FIG. 6 is a structure diagram of a single board constraint package generation module provided by the embodiment 2 of the present invention;
FIG. 7 is a structure diagram of another multimode network management configuration model upgrade apparatus provided by the embodiment 2 of the present invention;
FIG. 8 is a structure diagram of another multimode network management configuration model upgrade apparatus provided by the embodiment 2 of the present invention.

### Preferred Embodiments of the Present Invention

The embodiments of the present invention will be further described in detail through the specific embodiments and combining with the accompanying drawings below.

### Embodiment 1

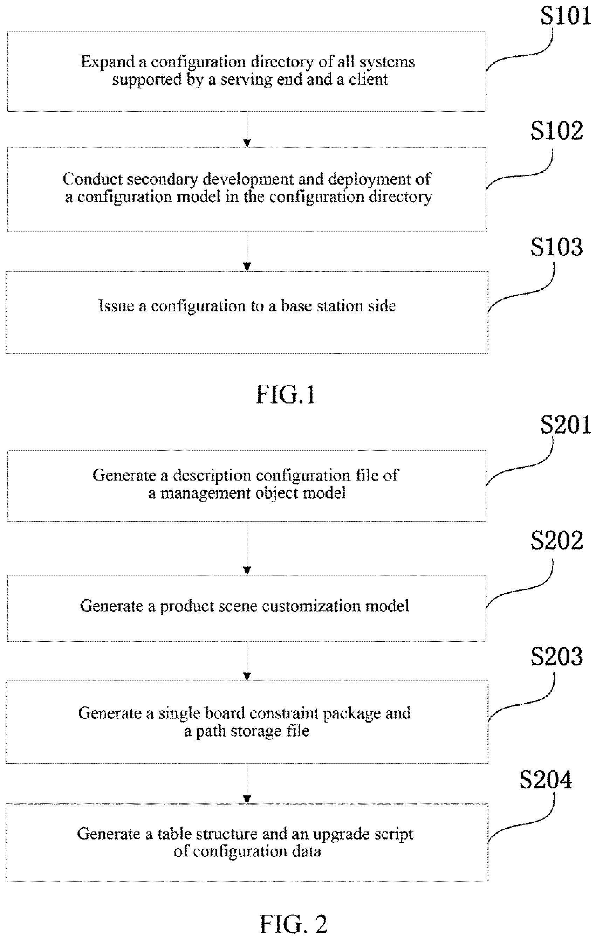

The present embodiment provides a multimode network management configuration model upgrade method, with reference to FIG 1, FIG. 1 is a flow chart of the method, and the method includes the following steps.

In step S101, a configuration directory of all systems supported by a serving end and a client is expanded.

In step S102, secondary development and deployment of a configuration model is conducted in the configuration directory.

In step S103, a configuration is issued to a base station side.

In the above step S101, the configuration directory is a directory of files storing various systems supported by the serving end and the client. The user can select a system combination that needs to be extended and a corresponding product model for expansion, and the model has already included the exiting supported system combinations. Alternatively, the following modes can be adopted for the expansion: (1) Based on an automatic configuration framework, each product is required to configure its own multimode deployment C/S end path, and each automatic generator is corresponding to a set of deployment configuration files of the present function, which is centralizedly managed through a unified framework. (2) Based on an existing product system, the serving end configuration and the client rack diagram configuration directory of the existing system are automatically scanned and copied, and then a loader automatically changes a model directory of copying paths to newly-added multimode deployment paths, then 12 types of deployment structure model directories, which are required to be divided into GSM, UMTS, GU, GL, UL, GUL, GTDL, UTDL, GUTDL, GFTL UFTL and GUFTL, are automatically extended.

In the above step S101, conducting secondary development and deployment of the configuration model in the configuration directory alternatively includes the following steps, please refer to FIG. 2.

In step S201, a description configuration file of a Managed Object Model (MOM) is generated; The MOM is called as a Network Resource Model (NRM) or called as a Management Information Model (MIM) in the 3GPP TS32.622. The MOM describes the property of a Managed Object Class (MOC), and an operating MOM describes the property and operation of a Managed Object Index (MOI).

Before the step S201, it may also include completing a version configuration directory change.

In step S202, a product scene customization model is generated, that is, the property customization is performed to the MOM model of the product, here the scene customization refers to setting different display interfaces for different systems, for example, for a GSM network of China Mobile, information including a wireless carrier thereof is displayed on a single board configuration function interface, and for the WCDMA of China Unicom, information related to the cell thereof is displayed on the single board configuration function interface.

In step S203, a single board constraint package and a path storage file of single board configurations are generated. A single board physical characteristic document is used to generate the single board service constraint package and increase an RRU/BBU single board set in a one-click mode, since then the single board rack diagram model has completed the uniform upgrade.

In step S204, after the objectified adaptation, a table structure and an upgrade script of configuration data are automatically generated to complete the local database upgrade of the network management system.

The OMMB can access a multimode base station at this point, thus the step S103 can be executed to issue the configuration, and after going through the MO adaption at the base station side, the configuration data are converted into foreground database table configuration data, the docking between the network management and the multimode base station is completed, and the user can start to manage multimode network elements.

In the above step S204,it also includes: setting the path storage file corresponding to a single board configuration function; herein, the path storage file is used for storing a storage path of a configuration file corresponding to the single board configuration function of each system; and according to a single board configuration function selected by a user and single board system information, searching for a storage path corresponding to the single board system information from a path storage file corresponding to the single board configuration function, and updating a configuration file in the storage path according to the single board configuration function selected by the user. Through the above settings, a terminal can find the configuration file corresponding to the single board configuration function according to the information input at the single board configuration function interface by the user, so as to update the configuration file (for example, modifying and replacing keyword information, etc.), but it is usually made by people to find a relevant configuration file and then modify the configuration file in the related art. Visibly, by using the above method, searching and modifying by human is replaced with searching and modifying by the terminal, which can reduce the processing procedure of people and greatly simplify the deployment of the secondary development. Alternatively, the storage path can be stored in the path storage file in group according to the client and the serving end, and a sort order of storage paths corresponding to each system in the client and the serving end is fixed. In order to illustrate the step in more detail, descriptions will be made by adding a BBU single board with one click hereinafter: the terminal stores a plurality of path storage files, respectively corresponding to a configuration function of adding the BBU single board with one click, a configuration function of adding a GU version number, and a configuration function of switching a platform version number and the like, in a configuration function interface of adding the BBU single board with one click, the user needs to input some data such as a name of the BBU single board required to be added and a supported system and so on, after the user inputs the data such as the name of the BBU single board and the supported system, the terminal searches for a path storage file corresponding to the configuration function of adding the BBU single board with one click, the client and the serving end respectively store paths of 12 systems in the path storage file, and the 12 systems are GSM, UMTS, GU, GL, UL, GUL, GTDL, UTDL, GUTDL, GFTL, UFTL and GUFTL respectively. The terminal searches for a path of the corresponding system according to a single board system such as GSM input by the user at the configuration function interface. Generally adding the BBU single board with one click mainly involves four configuration files: sdrmanager-model-board.xml and sdrmanager-model-ssb.xml at the serving end; mediator-sdrmap-card.xml and sdrmap-cm-rack-il8n.xml at the client. Therefore, the two configuration files sdrmanager-model-board.xml and sdrmanager-model-ssb.xml are stored in a storage path of each system in a serving end group of the storage path file, and the two configuration files mediator-sdrmap-card.xml and sdrmap-cm-rack-il8n.xml are stored in a storage path of each system in a client group of the storage path file. The principle of adding the BBU single board with one click is to delete all original information about the BBU first and make an addition again at the deletion position according to new requirements, that is, a new addition or a modification can be made. Therefore, the terminal will delete relevant configuration files under the path after finding the storage path corresponding to the GSM system and then write a configuration file of a new version of the single board into the storage path.

In addition, for various serial functions of the configuration model, an intermediate process and a final result of the multimode network management configuration model upgrading can also be recorded in the file (such as an automatic test report), which is convenient for positioning whether there is an abnormal in the configuration model upgrading in the upgrade process or positioning an unsuccessful creation of the model.

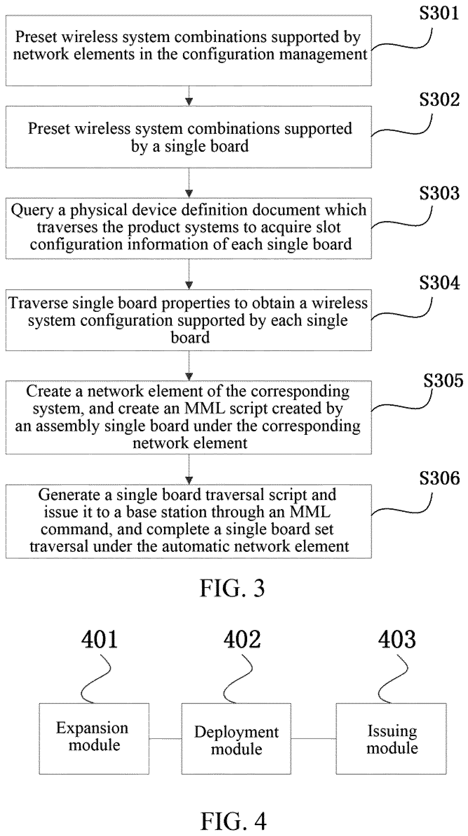

Alternatively, an automatic single board traversal script can also be created after performing the secondary development and deployment of the configuration model in the configuration directory, and single boards are tested one by one. After an automatic model is created, based on the existing configuration model, the automatic single board traversal script is required to be created. The automatic test method ensures the robustness testing of the configuration model, and with reference to FIG. 3, the following steps are included.

In step 301, The wireless system combinations supported by the network elements in the configuration management are preset. The wireless system combinations (GSM, UMTS, GU, GL, UL, GUL, GTDL, UTDL, GUTDL, GFTL, UFTL and GUFTL) supported by the network element in the configuration management are preset.

In step S302, The wireless system combinations (GSM, UMTS, LTE FDD, LTE TDD, GL, UL and GU) supported by the single board are preset.

In step S303, a physical device definition document which traverses the product systems is queried to acquire slot configuration information of each single board.

In step S304, single board properties are traversed to acquire a wireless system configuration supported by each single board.

In step S305, a network element of the corresponding system is created, an MML script created by an assembly single board is created under the corresponding network element.

In step S306, a single board traversal script is generated and issued to a base station through an MML command to complete a single board set traversal under the automatic network element.

In the present embodiment, execution of a basic man-machine command namely a Man-Machine Language (MML) command in the OMMB is adopted to replace the manual operation, and the MML command provides 4 basic commands: adding, deleting, modifying and querying, these four basic commands can replace the manual operation entirely. The MML consists of three key components: MOC, MOI and field attribute (ATTRIBUTES). For the single board, the MOC and the MOI can be known in advance, while the field attribute can be acquired through querying a single board function attribute list; for the single board, as long as a single board name and a single board number are acquired, the field attribute can be acquired, and other attributes can be generated with creation, such as, creation of a CCC single board and an FS single board. Therefore, the MML command can be created by means of: obtaining the systems supported by the single board and the system types created by default in the supported systems according to a single board function mode of the single board, and then assembling them into the MML command. For example, for creating the clock control (CCC) single board and the fiber switch (FS) single board, the specific commands are as follows:
CREATE: MOC="PlugInUnit", MOI="SubNetwork=0, MEID=1, Equipment=1, Rack=1, SubRack=1, Slot=1, PlugInUnit=1", ATTRIBUTES="description=1.1.1, PlugInUnit=1".

The classification of the single boards can be done according to the single board function list defined by board; under the same system, regardless of the base station types, the required single board types are exactly alike; the difference lies in that single boards in the same slot may be different under different systems. In this way, it is only required to establish the MML command of the corresponding single board under the 12 systems of different network elements, and a complete single board ergodicity test can be achieved. The test support process is actually an automatic creation of the test script after the multimode configuration model upgrade with regard to the single board traversal after the configuration model upgrade, and it is also a self-inspection process after the configuration model upgrade.

Compared with the time spent by the original manually operated test, the efficiency of the test support of the automatic script has been greatly improved. The automatic script testing is used to replace the manual operation, which can avoid the omission caused by the operation error and also can save a lot of manual operation time. Because the efficiency is especially high, it helps to early detect the problems. At the same time, one test script can be run in multiple version branches, which has a very strong versatility.

Thus it can be seen that the multimode network management configuration model upgrade method provided by the present embodiment greatly saves the human power of the network management development, and avoids the repeated development, the specificities of the service differences of various products are controlled through the automatic upgrade unified process, and the robustness testing also automatically generates the MML scripts, which saves the test maintenance manpower greatly. The error correction is easy, and the versatility is high, so that both the development efficiency and the program robustness have been guaranteed. By using the present apparatus, one-click automatic upgrade of the configuration model of the network management system can be completed, the development and testing manpower is greatly saved, the system robustness and expansibility and the efficiency of the configuration upgrade are all guaranteed.

### Embodiment 2

The present embodiment provides a multimode network management configuration model upgrade apparatus, referring to FIG. 4. The apparatus includes an expansion module 401, a deployment module 402 and an issuing module 403; the expansion module 404 is arranged to expand a configuration directory of all systems supported by a serving end and a client; the deployment module 402 is arranged to conduct secondary development and deployment of a configuration model in the configuration directory; and the issuing module 403 is arranged to issue a configuration to a base station side.

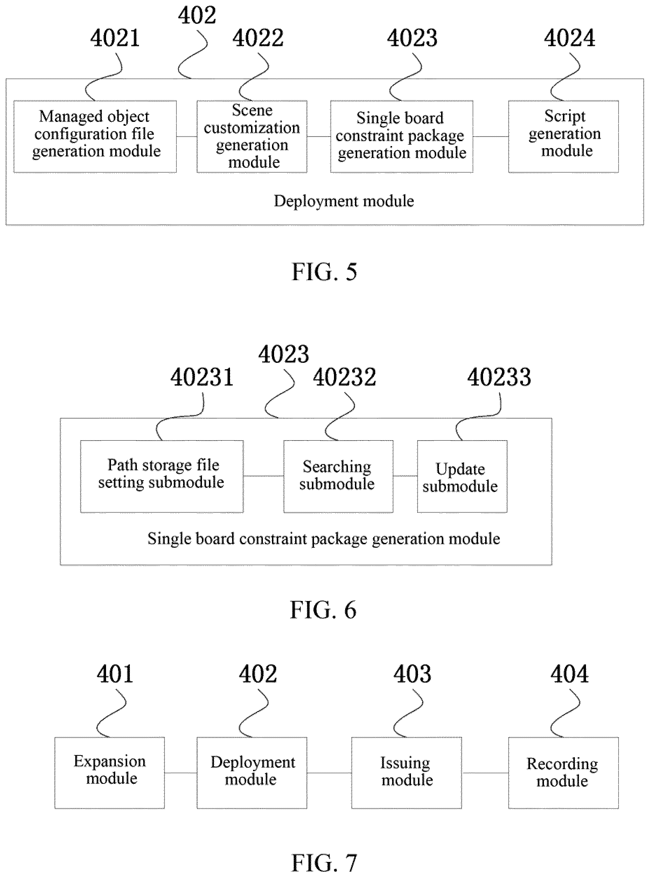

In a deployment module provided in the present embodiment, referring to FIG. 5, the deployment module 402 may also include an MOM configuration file generation module 4021, arranged to generate an MOM configuration model description configuration file; a scene customization model generation module 4022, arranged to generate a product scene customization model; a single board constraint package generation module 4023, arranged to generate a single board constraint package and a path storage file of single board configurations; and a script generation module 4024, arranged to generate a table structure and an upgrade script of configuration data. Alternatively, the single board constraint packet generation module 4023 also includes a path storage file setting submodule 40231, a searching submodule 40232 and an update submodule 40233, referring to FIG. 6. The path storage file setting submodule 40231 is arranged to set a path storage file corresponding to a single board configuration function; the path storage file is used for storing a storage path of a configuration file corresponding to the single board configuration function of each system; the searching submodule 40232 is arranged to: according to a single board configuration function selected by a user and single board system information, search for a storage path corresponding to the single board system information from a path storage file corresponding to the single board configuration function; and the update submodule 40233 is arranged to update a configuration file in the storage path according to the single board configuration function selected by the user.

In the present embodiment, another multimode network management configuration model upgrade apparatus is further provided, referring to FIG. 7. The apparatus includes each module in FIG. 4, and further includes a recording module 404, arranged to record both an intermediate process and a final result of the multimode network management configuration model upgrading in a file.

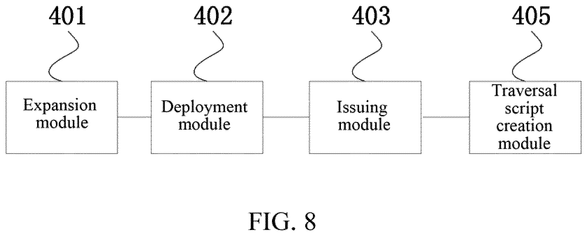

In the present embodiment, another multimode network management configuration model upgrade apparatus is further provided, referring to FIG. 8. The apparatus includes each module in FIG. 4, and further includes a traversal script creation module 405, arranged to create an automatic single board traversal script, and test single boards one by one.

The ordinary person skilled in the art can understand that all or part of steps in the above-mentioned embodiments can be fulfilled by using a flow of computer program flow, and the computer program can be stored in a computer readable storage medium, and the computer program is executed on corresponding hardware platforms (such as a system, a device, an apparatus, and a component, etc.), and when the program is executed, one of the steps or a combination of the steps of the method embodiments is included.

In an exemplary embodiment, all or part of the steps in the above-mentioned embodiments also can be implemented by using the integrated circuits. These steps can be made into multiple integrated circuit modules respectively, or multiple modules or steps therein are made into a single integrated circuit module to be implemented. In this way, the present invention is not limited to any combination of hardware and software in a specific form.

Each device/function module/function unit in the above-mentioned embodiments can be implemented by using a universal calculating apparatus, and they can be integrated in a single calculating apparatus or distributed in a network made up by a plurality of calculating apparatus.

Each device/function module/function unit in the above-mentioned embodiments can be stored in a computer readable storage medium when it is implemented in the form of the software function module and is sold or used as an independent product. The above-mentioned computer readable storage medium can be a read only memory, a magnetic disk or an optical disk, etc.

All the modifications or replacements which can be thought out easily by any skilled people familiar to the art within the technical scope disclosed by the present invention should be covered in the protection scope of the present invention. Therefore, the protection scope of the present invention should be based on the protection scope described by the claims.

### Industrial Applicability

The multimode network management configuration model upgrade method and apparatus provided by the embodiments of the present invention include: expanding a configuration directory of all systems supported by a serving end and a client; conducting secondary development and deployment of a configuration model in the configuration directory; and issuing a configuration to a base station side. By expanding the configuration directory of all systems supported by the serving end and the client, unified management of all systems supported by the serving end and the client is completed, so that the secondary development and deployment of the configuration models conducted in the configuration directory is more convenient and effective. Each product developer can complete automatic upgrading of a multimode configuration model with regard to service constraints of his/her products, so that repeated development caused by the same platform service is avoided.

## Claims

1. A multimode network management configuration model upgrade method, comprising:
expanding a configuration directory of all systems supported by a serving end and a client;
conducting secondary development and deployment of a configuration model in the configuration directory; and
issuing a configuration to a base station side.

2. The method according to claim 1, wherein, conducting secondary development and deployment of a configuration model in the configuration directory comprises:
generating a description configuration file of a managed object model;
generating a product scene customization model;
generating a single board constraint package and a path storage file of single board configurations; and
generating a table structure and an upgrade script of configuration data.

3. The method according to claim 2, wherein, generating a single board constraint package and a path storage file of single board configurations comprises:
setting the path storage file corresponding to a single board configuration function, wherein, the path storage file is used for storing a storage path of a configuration file corresponding to the single board configuration function of each system; and
according to a single board configuration function selected by a user and single board system information, searching a path storage file corresponding to the single board configuration function for a storage path corresponding to the single board system information, and updating a configuration file in the storage path according to the single board configuration function selected by the user.

4. The method according to claim 3, wherein, the storage path is stored in the path storage file in groups according to the client and the serving end, and a sort order of storage paths corresponding to each system in the client and the serving end is fixed.

5. The method according to any one of claims 1 to 4, further comprising: recording both an intermediate process and a final result of multimode network management configuration model upgrading in a file.

6. The method according to any one of claims 2 to 4, after performing secondary development and deployment of the configuration model in the configuration directory, further comprising: creating an automatic single board traversal script, and testing single boards one by one.

7. A multimode network management configuration model upgrade apparatus, comprising an expansion module, a deployment module and an issuing module; wherein,
the expansion module is arranged to expand a configuration directory of all systems supported by a serving end and a client;
the deployment module is arranged to conduct secondary development and deployment of a configuration model in the configuration directory; and
the issuing module is arranged to issue a configuration to a base station side.

8. The apparatus according to claim 7, wherein, the deployment module further comprises:
a managed object model configuration file generation module, arranged to generate a description configuration file of a managed object model;
a scene customization model generation module, arranged to generate a product scene customization model;
a single board constraint package generation module, arranged to generate a single board constraint package and a path storage file of single board configurations; and
a script generation module, arranged to generate a table structure and an upgrade script of configuration data.

9. The apparatus according to claim 8, wherein,
the single board constraint package generation module further comprises a path storage file setting submodule, a searching submodule and an update submodule;
the path storage file setting submodule is arranged to set a path storage file corresponding to a single board configuration function; the path storage file is used for storing a storage path of a configuration file corresponding to the single board configuration function of each system;
the searching submodule is arranged to: according to a single board configuration function selected by a user and single board system information, search a path storage file corresponding to the single board configuration function for a storage path corresponding to the single board system information; and
the update submodule is arranged to update a configuration file in the storage path according to the single board configuration function selected by the user.

10. The apparatus according to any one of claims 7 to 9, further comprising a recording module, arranged to record both an intermediate process and a final result of multimode network management configuration model upgrading in a file.

11. The apparatus according to any one of claims 8 to 9, further comprising a traversal script creation module, arranged to create an automatic single board traversal script, and test single boards one by one

12. A computer program, comprising a program instruction, which, when the program instruction is executed by a multimode network management configuration model upgrade device, enable the device to execute the method according to any one of claims 1-6.

13. A carrier carrying the computer program according to claim 12.
